(19)

Europäisches
Patentamt
European
Patent Office
Office européen
des brevets

(11) **EP 2 051 525 A1**

(12) **EUROPEAN PATENT APPLICATION**

(43) Date of publication:
**22.04.2009 Bulletin 2009/17**

(51) Int Cl.:
*H04N 7/26* (2006.01)   *H04N 7/50* (2006.01)
*H04N 7/24* (2006.01)

(21) Application number: **07118521.9**

(22) Date of filing: **15.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicants:
• **Mitsubishi Electric Information Technology Centre**
  **Europe B.V.**
  **The Surrey Research Park**
  **Guildford**
  **Surrey GU2 7YD (GB)**
  Designated Contracting States:
  **GB**
• **MITSUBISHI DENKI KABUSHIKI KAISHA**
  **Chiyoda-ku, Tokyo 100-8310 (JP)**
  Designated Contracting States:
  **AT BE BG CH CY CZ DE DK EE ES FI FR GR HU IE IS IT LI LT LU LV MC MT NL PL PT RO SE SI SK TR**

(72) Inventors:
• **Sprljan, Nikola**
  **Surrey GU1 3LL (GB)**
• **Cieplinski, Leszek**
  **Surrey GU1 2UF (GB)**

(74) Representative: **HOFFMANN EITLE**
**Patent- und Rechtsanwälte**
**Arabellastrasse 4**
**81925 München (DE)**

(54)   **Bandwidth and content dependent transmission of scalable video layers**

(57)   In a video decoder, a Content Feature Extraction module 2 extracts different features of compressed video output by a Video Encoder module 4. Since videos can differ widely in characteristics, a different model or model parameters may exist for a different category of video, identified by a content feature vector class matching. In addition, since different rendering operations may require different models, the Content Feature Extraction module 2 receives a request for a specific feature vector from a database 6 of supported Rendering Operations. A Category-based Optimal Priority List Generation module 8 compares the extracted content feature vector with ones in a Feature Vector Classes database 10, and utilises the corresponding model to generate an optimal priority list of scalable video layers . This information is sent to a Video Adapter module 12. The Video Adapter module 12 processes the information on Decoder Capabilities that it receives from a Video Decoder module 14 to select an optimal adaptation strategy. The Video Decoder module 14 renders the received scalable video layers, using the information on the used mode, received from Video Adapter 12.

Figure 9

**Description**

**Field of the Invention**

The present invention relates to the field of video compression and decompression.

**Background to the invention (prior art)**

**Scalable video coding**

The objective of video compression has traditionally been to optimize decoded video quality at a given picture size, frame rate and bitrate (single-layer coding). The emergence of increasingly complex networks has led to growing interest in the development of a video codec that can dynamically adapt to the network architecture and temporal variations in network conditions such as bandwidth and error probability. Channel bandwidth may easily vary by several orders of magnitude between different users on the same network. Furthermore, the rapid progression towards network inter-connectivity has meant that devices such as mobile phones, handheld personal digital assistants and desktop workstations, each of which have different display resolutions and processing capabilities, may all have access to the same digital media content. The recent progress in video coding research is enabling the development of such codecs that achieve compression performance comparable to the state of the art non-scalable solutions, such as MPEG-4 Advanced Video Coding standard (MPEG-4 AVC/H.264), while providing a wide range of adaptability in spatial resolution, frame rate and quality/bitrate.

The most distinctive feature of scalable video coding, as compared to traditional techniques, is the flexibility of the codec design, which allows for almost arbitrary combinations of bitstream layers in temporal, spatial and quality dimensions. Scalable video coding aims to address the diversity of video communications networks and end-user interests, by compressing the original video content in such a way that efficient reconstruction at different bit-rates, frame-rates and display resolutions from the same bitstream is supported. Bit-rate/quality scalability refers to the ability to reconstruct a compressed video over a fine gradation of bitrates, without loss of compression efficiency. This allows a single compressed bitstream to be accessed by multiple users, each user utilizing all of their available bandwidth. Without quality scalability, several versions of the same video data would have to be made available on the network, significantly increasing the storage and transmission burden. Other important forms of scalability include spatial resolution and frame-rate (temporal resolution) scalability. These allow the compressed video to be efficiently reconstructed at various display resolutions, thereby catering for the different capabilities of all sorts of end-user devices. This is particularly significant as the new audio-visual applications and products require adaptation of the content to complex network architectures, diverse user terminals and varying bandwidths and error conditions. Traditional, non-scalable codecs are not well-suited for such environments and this is where the benefits of scalability are most clearly visible.

These advantages of scalable video coding resulted in significant interest from industry, which led to the joint standardization activity currently taking place in ISO/IEC Motion Pictures Experts Group (MPEG) and ITU-T Video Coding Experts Group (VCEG) under the auspices of the Joint Video Team (JVT), which will become MPEG-4 Scalable Video Coding standard (MPEG-4 SVC). The work on the first version of the new standard was completed in July 2007 and the publication is expected shortly. The final public draft of the standard (which will become ISO/IEC 14496-10/AMD2 and ITU-T Recommendation H.264 Annex F) is the Joint Draft 10, Joint Video Team document JVT-W201. An overview of the new codec can be found in a paper by H. Schwartz, D. Marpe and T. Wiegand entitled "Overview of the Scalable Extension of the H.264/MPEG-4 AVC Video Coding Standard", IEEE Transactions on Circuits and Systems for Video Technology, September 2007.

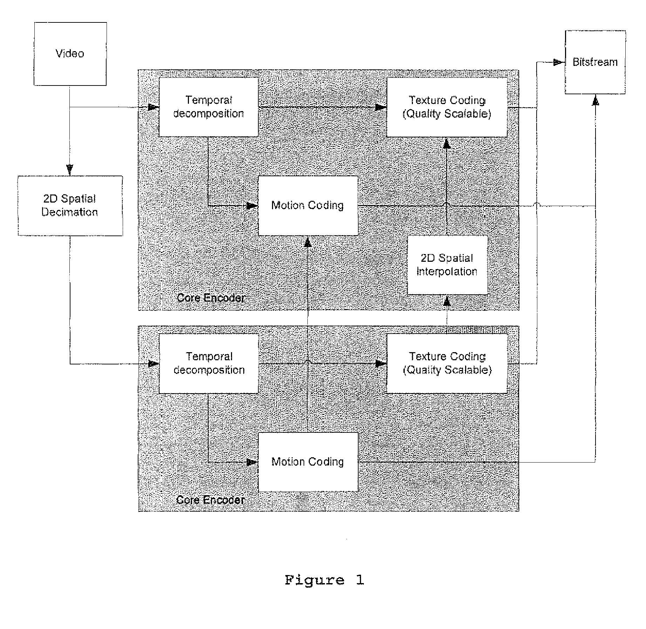

The overall structure of the scalable coder is illustrated in Figure 1 for two levels of spatial scalability. Pyramid spatial decomposition is used so the video is downsampled the required number of times prior to further processing. If required, temporal downsampling can be performed at the same time by dropping frames that are not needed in the lower layers. The signal is subsequently passed to the "core encoders", which are similar to the non-scalable MPEG-4 AVC coders with extensions for inter-layer prediction and quality scalability.

Temporal scalability is achieved by the use of B frames. In contrast to the previous coding standards, MPEG-4 AVC allows for the B frames to be used for further prediction. This feature is used to perform hierarchical temporal decomposition, which allows for multiple layers of temporal scalability while at the same time providing significant compression efficiency improvement.

Similarly as in MPEG-4 AVC, the frames are processed macroblock by macroblock. The macroblocks are be grouped into slices for efficient packetisation and to improve error resilience. The range of coding modes for macroblocks is extended by the addition of inter-layer prediction modes. For motion-compensated macroblocks, it is possible to re-use the motion vectors from lower layers if they provide sufficiently good prediction, otherwise new motion vectors are sent in the enhancement layer. The texture of intra macroblocks can be predicted from lower layer macroblocks instead of their spatial neighbourhood, as in MPEG-4 AVC's intra-frame prediction. Similar prediction process can be also applied to the motion compensation prediction residual for inter-prediction macroblocks, The selection of the scalable or non-scalable prediction modes is based on a rate-distortion optimisation process, which is a generalisation of a technique familiar from non-scalable coding. The use of the scalable macroblock modes is signalled using a set of flags designed for coding efficiency and minimisation of changes to the non-scalable decoder processes.

The prediction residual is encoded using one of the transforms specified in MPEG-4 AVC. The resulting transform coefficients are quantised and entropy coded to obtain base quality level for the given spatial layer. Quality enhancements can be provided either at coarse (CGS) or fine granularity (FGS). Coarse granularity is achieved using similar prediction modes as those used for spatial scalability and is more efficient when a limited number of quality layers are required. FGS (called progressive refinement in the MPEG-4 SVC draft) is achieved using a variation of bitplane coding. The transform coefficients are coded in multiple passes (over the whole picture), with every pass containing a refinement of the representation of the coefficients sent in the previous pass.

The CGS approach is less flexible than FGS because of a more limited choice of available bitrates and because switching between the layers can only be performed at predetermined points. On the other hand, the impact of switching at "illegal" points can be controlled in many applications and CGS has the advantage of being significantly simpler both in terms of implementation and computational complexity. It is therefore considered to be a more suitable choice for applications that do not require the extreme flexibility supported by FGS. It should be noted that FGS quality scalability is not included in the first version of the MPEG-4 SVC standard and is under consideration for a later version.

Another feature not included in the standard is the multiple-loop decoding. It is required for unrestricted inter-layer intra texture prediction, where the decoder has to decode all lower spatial and quality layers that are provided in the bitstream for the reconstruction of the target resolution. Multiple-loop decoding can also be done for the bitstream not created with the unrestricted mode enabled at the encoder, if for any reason the lower layers have to be fully decoded. This mode provides improved compression performance, but the increase in decoder's complexity was considered to be too high to justify its inclusion.

Every slice in the bitstream is identified as belonging to a specific scalable layer using dependency_id field for spatial or coarse-granularity scalability layers, temporal_id for temporal layer and quality_id for quality layers. The latter were originally reserved for FGS, but in version 1 of the standard are used for medium grain scalability (MGS), which uses similar techniques as CGS adapted somewhat to increase the number of available layers and allow splitting of transform coefficients between different quality layers, In addition to these, it is also possible to label the slices with priority_id syntax element. This was introduced as a means of ensuring consistent quality of different slices but allows significant flexibility of the adaptation. It is still limited, however, to a one-dimensional extraction path through the scalability space. Techniques proposed in JVT-S044 (I. Amonou et al., "Enhanced SNR scalability for layered CGS coding using quality layers", Geneva, April 2006.) and JVT-S043 aims at achieving MGS by assigning the priority_id syntax element to different pictures/slices within one quality layer. The allocation of pictures/slices to different priorities is done in a rate-distortion optimal sense.

**Notation for describing scalable layers**

The following notation will be used in the following description to refer to the various aspects of scalability. It applies to general scalable video codec, with combined spatio-temporal-SNR (quality) scalability.

A video bit-stream layer is denoted as $\lambda$ and is defined by a ($s,t,q$) triplet, where $s$, $t$ and $q$ are spatial, temporal and SNR indices of the layer in question:

$$\lambda = (s,t,q)$$

The total number of layers is denoted as $N$. When layer is denoted as $\lambda_n$, the index $n$ specifies the order number of a layer, such that $n=0,..., N$-1, and is determined by a $s$-$t$-$q$ space scanning order used at the encoder, and in general can be arbitrary. Note that in the MPEG-4 SVC standard the spatial and quality scalability may use the same index (dependency_id syntax element, in the case of CGS quality scalability). However, for the purpose of introducing the necessary notation, here $s$ and $q$ indices are used also. The set comprising all layers on which a layer $\lambda$ is dependent is denoted as $\Delta(\lambda)$. A selection of layers that the extractor module selects when adapting a bit-stream is denoted as A. It is also referred to as "adaptation point". Note that in the case where only a subset of scalability levels is considered then the layer with index $t = 0$, $s = 0$ or $q = 0$ in this notation may encompass all lower layers of the actual bit-stream.

A specific spatio-temporal decoding/operation point $P$ corresponds to the spatial resolution and frame-rate that the video can be decoded to. It is determined with a ($s,t$) pair, and denoted as:

$$P = (s, t)$$

If the total number of spatio-temporal decoding points is $K$, a specific spatio-temporal decoding point is then denoted as $P_k$, such that $k=0,..,K$-1. The spatial index of an operation point $P$, or some layer $\lambda$, is denoted as $s(P)$ or $s(\lambda)$, and similarly, the temporal index is denoted as $t(P)$ or $t(\lambda)$.

A set of layers $Q(P_k)$ is defined as the set of all layers with the same spatial and temporal indices as the given spatio-temporal operation point $P_k$:

$$Q(P_k) = \left\{ \lambda : s(\lambda) = s(P_k), t(\lambda) = t(P_k) \right\}$$

The number of elements in $Q(P_k)$ is $Q_k$ and it corresponds to the number of quality layers present at a particular spatio-temporal point.

The total number of layers with a lower or equal spatial and temporal index than the observed $P_k$, i.e. those that satisfy conditions $s(\lambda) \leq s(P_k)$ and $t(\lambda) \leq t(P_k)$, is denoted as $M_k$.

Extraction targeting decoding a specific $P_k$ is performed by choosing $\lambda \in Q(P_k)$, such that the final selected bitstream corresponds to the layer set $\lambda \cup \Delta(\lambda)$. The number of possible combinations, or sets, of layers targeting $P_k$ is denoted as $C_D(P_k)$, where subscript 'D' represents the "default" mode of extraction, i.e. the mode based on temporal_id, dependency_id and quality_id syntax elements, as defined in the version 1 of the MPEG-4 SVC standard (G.10.1).

One set of layers, representing one possible combination, to be extracted is denoted as $\Lambda_{k,i}^{D}$ , where $i = 0,.., C_D(P_k)$-1. Note that terms "set of layers" and "combination of layers" is used interchangeably in the following discussion.

**Perceptual distortion modelling in video coding**

Various models of perceptual distortion using the objective distortion metrics as parameters have been proposed. An overview can be found in Z. Wang et al., "Image quality assessment: from error visibility to structural similarity", IEEE Transactions on Image Processing, vol. 13, pp. 600-612, April 2004, In the following, the perceptual distortion measure is referred to as Quality Measure, and denoted as QM. Depending on the types of impairment in the video that are considered, the models for computing QM have different degree of complexity - the more types of impairment are allowed for, the more complex the model becomes. However, for a single video compression method, where the accumulation of compression artefacts usually correspond to an increase in the objective distortion, a relationship between an objective measure, commonly Mean Squared Error (MSE) or Peak Signal to Noise Ratio (PSNR), and the QM can be relatively easily established. For instance, a simple linear model with predefined saturation limits has been used in S. Khan et al., "MOS-Based Multiuser Multiapplication Cross-Layer Optimization for Mobile Multimedia Communication", Advances in Multimedia, 2007, and a general linear model in G. Hauske at al., "Subjective Image Quality of Low-Rate and Low-Resolution Video Sequences", 8th International Workshop on Mobile Multimedia Communications (MoMuC), March 2003. In both of these works PSNR is in a linear relationship to QM.

**Layer extraction in MPEG-4 SVC**

The encoder imposes a certain structure on the SVC bitstream. In particular, the dependencies between the layers which it uses limit the ways in which the adaptation can be performed. The decisions on what layers and what dependencies are introduced are not standardised; the standard only defines the signalling of the included layers and of the dependencies between them.

Document JVT-U081 (J. Lim et al., "An optimization-theoretic approach to optimal extraction of SVC bitstream", Hangzhou, October 2006) proposes a non-normative method for selecting the optimal scalability levels, using the conventional extraction. The problem is solved through maximisation of the selected quality measure, which is a weighted combination of influence of reduction in spatial, temporal or quality dimension of the video. The quality measure that is obtained is denoted as $QM_E$, where 'E' stands for estimated. The quality perception measure is defined as follows:

$$QM_E(s,t,q) = w_S \cdot f_S(s) + w_T \cdot f_T(t) + w_Q \cdot PSNR(s,t,q) \text{,}$$

where $w_S$, $w_T$ and $w_Q$ indicate the weighting factors of the spatial, temporal and quality scalabilities, respectively, while $f_S()$ and $f_T()$ are functions modelling the contribution of spatial and temporal scalability, respectively, to the overall quality. The last term depends on the overall bit-rate of a particular extracted bit-stream, and is defined in terms of PSNR. The temporal scalability term, $f_T()$ is modelled by an expo-logarithm function, and reflects the fact that the subjective quality is lower when a video is played at a lower frame-rate. Since the reduction in spatial direction is compensated for at the decoder by interpolation/upsampling up to the original resolution, the PSNR can be computed directly at the original scale, and thus the spatial PSNR of the spatial component is lumped together with the overall PSNR, and thus $f_S()$ is dropped. The method is reported to have performed favourably when compared to the conventional method of selection with the overall bit-rate as the sole constraint. However, it is unclear how well it would perform subjectively as it has not been verified how well the obtained values $QM_E$ correlate with real QM given by the HVS (perceptual evaluation with human observers was not conducted).

**Error concealment for SVC**

Several error concealment modes for SVC have been proposed in JVT-Q046 (Chen Ying et al.,"Frame Loss Error Concealment for SVC", Nice, October 2005). Namely, the following methods are proposed:

1. FC - frame copy. The first frame in the reference frames list is just copied. This may cause significant propagation of error for cases where such concealed frame is used as a reference for compensation.

2. TD - temporal direct motion vector generation. Collocated MB mode and MV are used.

3. BlSkip - motion and residual upsampling. Both motion vectors and residual data are upsampled from the base layer. If the base layer is missing, then BlSkip+TD is used.

4.RU - reconstruction base layer upsampling. Base (or the first lower) layer is reconstructed and upsampled to compensate for the missing enhancement layer. If the base layer is missing, RU+FC is used.

Experiments have shown that BlSkip and RU outperform the FC and TD algorithms.

**Problems in the Prior Art**

The prior art suffers from a number of problems.
For example, with a constraint of total bit-rate budget, combined scalability (spatial-temporal-quality) leads to multiple options in bit-stream extraction/adaptation.
However, it is difficult to estimate which layer combination is optimal with regard to the subjective quality. For example, the first choice one can have is whether to drop layers in the SNR scalability direction, or in the temporal scalability direction.
In addition, adaptation methods other than truncation offer a reduced number of decoding points, which then reduces the versatility of the scalable video in dynamic adaptation scenarios.

**Summary of the Invention**

According to the present invention, there is provided a method of processing video data comprising a plurality of scalable layers, in which, prior to transmitting video data to the decoder, the video data is processed to generate a layer combination, and only those layers required by the layer combination are transmitted to the decoder. The layer combination is generated in dependence upon the bandwidth of the communication channel to be used to transmit the layers to the decoder and/or the capability of the decoder to compensate for missing layers during the decoding process.
In this way, the amount of data transmitted to the video decoder can be reduced if only limited communication bandwidth is available, but the optimal data to transmit is selected and transmitted.
Preferably, the layer combination is generated taking into account expected impairment to the appearance of the reconstructed video data when different layer combinations are used.
The present invention also provides apparatus for processing video data comprising a plurality of layers having different spatial, temporal and/or quality properties to support reconstruction of the video data at different bit-rates, frame rates and/or display resolutions, the apparatus comprising:

means for generating data defining a combination ordering of at least some of the layers in dependence upon at least one of the bandwidth for transmission of the video data to a decoder and a capability of the decoder to process video data to compensate for missing information during decoding; and

means for transmitting layers in accordance with the combination ordering to the video decoder for reconstruction of video data for display.

Preferably, the apparatus is operable to process video data comprising layers in accordance with the MPEG-4 scalable video coding standard.

These features are based upon the idea of increasing the number of possible layer combinations to all decodable layer combinations, which consequently increases the number of available bit-rates. As will be explained below, an embodiment introduces a new way of signalling of the priority order of layer combinations, which is not constrained by the requirement that the layer combinations constitute an embedded sequence of layer subsets. In other words, this mapping cannot be achieved by a one-dimensional scheme, such as is obtained with priority_id syntax element.

As opposed to the default extraction, where spatial and quality layers are removed equally across temporal levels, here an unconstrained extraction scheme is used, where any combination of layers is allowed, with the only requirement that all dependencies are present. This also requires a generalisation of the decoder's operation. To display a video at a specific predetermined spatio-temporal point, the decoding process is coupled with the process of compensating for the missing parts of video information. This compensation uses the fact that the video signal is correlated in both spatial and temporal directions, and that the encoder, due to various constraints, is never able to fully exploit this correlation. This compensation thus may comprise of spatial and temporal upsampling/interpolation, or a combination thereof. This generalisation of decoding process, obtained by coupling it with missing information compensation is here termed "rendering", i.e. preparation of the decoded stream for display at a particular spatio-temporal point. With the knowledge of the decoder's rendering capabilities, the appropriate impairment estimation model can be employed and the preferred layer combination ordering that is optimal with respect to the expected visual quality can then be computed. This impairment model expresses preferences of human visual system (HVS) regarding certain layer combination. Thus, an embodiment of the present invention makes it possible to trade off the increase in decoding complexity against the better bandwidth utilisation.

The decoder incapable of any rendering operations that require compensation for the missing spatial and SNR layers would behave as a baseline SVC decoder, and display video at a fixed spatial resolution and potentially varying frame-rate (dropping frames only). All other more advanced rendering operations would have to be defined in terms of the expected perceived distortion model and would be signalled in appropriate way. An obvious choice in rendering may employ the techniques similar to the ones used for error concealment, ranging from simple spatial upsampling to some combination of motion-information based spatio-temporal interpolation.

The layer combination priority list is constructed at the entity that possesses the knowledge of the impairment model parameters and is able to feed the model with the data obtained from the video, either during encoding or using partial/full decoding. Such generated layer combination priority list is then conveyed to adaptation modules and decoders.

**Description of the figures**

Embodiments of the invention will now be described, by way of example only, with reference to the accompanying drawings, in which:

Figure 1 shows a block diagram of a prior art scalable video codec.

Figure 2 shows dependencies between SVC layers in an embodiment of the present invention, in which the temporal level decoding points $P'_{3,j}$ are defined for decoding at $P_3$.

Figure 3 shows possible layer combinations for $P_0$.

Figure 4 shows possible layer combinations for $P_1$.

Figure 5 shows possible layer combinations for $P_2$.

Figure 6 shows possible layer combinations for $P_3$.

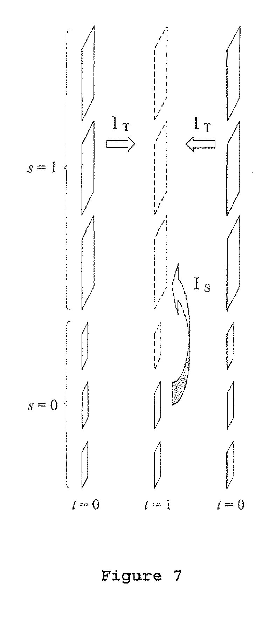

Figure 7 shows another representation of $\Lambda_{3,4} = \{\Lambda_0, \Lambda_1, \Lambda_2, \Lambda_3, \Lambda_4, \Lambda_6, \Lambda_7, \Lambda_8\}$ .

Figures 8a and 8b show examples of modelling the quality measure for possible layer combinations, in which black dots denote the MSE values available at the encoder.

Figure 9 shows a system diagram of an embodiment.

**Embodiments**

**Extended definition of layer extraction**

In addition to the default mode of extractor here the extended mode is defined. As opposed to the default mode, the extended mode does not require the presence of any layers belonging to the spatio-temporal operation point $P_k$ in the adapted bitstream, i.e. no layer from $Q(P_k)$ needs to be present in the adapted bit-stream. A set of layers obtained by the extended operation mode of the extractor is denoted as $\Lambda^E$. In the extended operation mode the only constraints in extraction are that the dependencies are respected and that layers selected are not at higher temporal or spatial levels than those of the required spatio-temporal operation point $P_k$. In other words, for any layer $\lambda \in \Lambda^E_{k,i}$ the following must be satisfied: $\Delta(\lambda) \subseteq \Lambda^E_{k,i}$ , and $s(\lambda) \leq s(P_k)$ and $t(\lambda) \leq t(P_k)$. The number of possible sets of layers in this case is denoted as $C_E(P_k)$. Since this mode allows more freedom in layer selection, the number of combinations is potentially higher than for the default mode, $C_E(P_k) \geq C_D(P_k)$.

For the purpose of simpler calculation of $C_D$, and $C_E$, in the following illustrative example, here the following assumptions are made:

- Any layer is dependent on all existing layers at the lower quality and temporal levels and at the same spatial level, and on all existing layers at the lower spatial and temporal levels, i.e.

$$\Delta(\lambda_n) = \left\{ \lambda : t(\lambda) \leq t(\lambda_n) \vee \left( \left( s(\lambda) = s(\lambda_n) \vee q(\lambda) \leq q(\lambda_n) \right) \wedge s(\lambda) \leq s(\lambda_n) \right) \right\} .$$

For the streams that do not comply with this requirement the number of possible extracted sets will be higher as removal of some inter-layer dependencies will permit some additional sets of extracted layers.

- The number of temporal layers at each spatial level is the same. Then, if $S$ and $T$ are the total number of levels for spatial and temporal scalabilities, respectively, then $T$ is constant across all spatial levels. Therefore the total number of spatio-temporal points is $K=S \cdot T$.

It should be noted that the MPEG-4 SVC standard does not impose these constraints and the present invention is not limited to such cases.

For the default mode of extraction it simply follows that $C_D(P_k) = Q_k'$ i.e., the number of combinations that produce a sequence at spatio-temporal decoding point $P_k$ is equal to the number of layers in $Q(P_k)$.

To simplify further the notation for computing the number of available layer combinations in the extended mode of extraction, in the following all quality and spatial layers within one temporal level are merged into one. In other words, when targeting the spatio-temporal decoding point $P_k$, all operation points at spatial levels that are lower or equal to $s(P_k)$, are merged into "temporal decoding points" and are denoted as $P'_{k,j}$ . The number of temporal levels up to and including $P_k$ is denoted as $T_k$, where $T_k = t(P_k)+1$. Then the temporal levels $P'_{k,j}$ are defined at $j=0,...,T_k-1$. The number of quality layers in each $P'_{k,j}$ is equal to the sum of numbers of quality layers in the corresponding merged spatio-temporal points (at a particular temporal level $t\left(P'_{k,j}\right)$ and up to and including spatial resolution level $s(P_k)$) and is denoted as $D_{k,j}$. With the previously stated constraint that the number of temporal levels is constant across all spatial levels, it follows that the number of dependency levels is also constant across temporal levels, $D_{k,0}=D_{k,1}=...=D_{k,Tk-1}$, and is denoted simply as $D_k$.

In the extended extraction mode, the number of dependency layers selected at each temporal level can be different and for temporal level $t$ is denoted as $d_1$. Now the requirements for extended mode can be restated with a simpler requirement: $d_0 \geq d_1 \geq ... \geq d_{Tk}-1$. The number of layer combinations $C_E(P_k)$ is then obtained after observing that the sets $\{d_0,...,d_{Tk-1}\}$ are multisets of cardinality $T_k$ with elements taken from a set of cardinality $D_k$. Note: multisets are generalisation of sets, where an element of a multiset can occur more than once. The number of multisets is given by

the multiset coefficient: $\left(\!\!\binom{d}{t}\!\!\right) = \binom{t+d-1}{t}$, , where $t$ is cardinality of multisets with elements of taken from a set of cardinality $d$.

A further distinction is made between two variants of extraction:

- Variant A: at least the base layer has to be available, for all temporal levels, $d_l>0$.

- Variant B: at least the base layer is available for the lowest temporal level, $d_0>0$.

For variant A follows:

$$C_E(P_k) = \left(\!\!\binom{T_k+D_k-1}{T_k}\!\!\right) = \binom{T_k+D_k-1}{T_k} = \frac{(T_k+D_k-1)!}{(D_k-1)!T_k!},$$

and for variant B:

$$C_E(P_k) = \left(\!\!\binom{D_k-1}{T_k}\!\!\right) - 1 = \binom{T_k+D_k}{T_k} - 1 = \frac{(T_k+D_k)!}{D_k!T_k!} - 1$$

The two described extraction modes (default and extended) can be compared with the unconstrained extraction mode. The unconstrained mode is introduced only for the purpose of comparison, as it is of no practical use. With the only exception that the base layer is always selected, no dependencies are observed, and therefore this mode does not always yield combinations where all layers can be used in decoding. The number of such combinations denoted as $C_u(P_k)$, and is computed as $C_U(P_k)=2^{Mk-1}$.

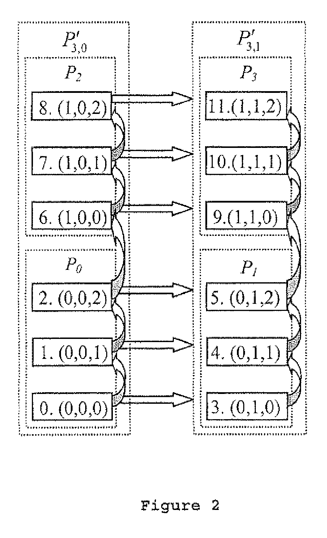

All combinations available by the proposed extraction mode will be illustrated with the following example. The SVC layers depiction in Figure 2 displays the typical dependency structure in an SVC bitstream with two spatial and temporal ($S=2$ and $T=2$) and three quality layers at each spatial level. Thus, $N=12$ and $K = 4$. The spatio-temporal decoding points are defined as follows: $P_0=(0,0)$, $P_1=(0,1)$, $P_2=(1,0)$ and $P_3=(1,1)$. The layers are indexed as $n.(s,t,r,q)$ according to their $s$-$t$-$q$ space scanning order number $n$ and the corresponding $(s,t,q)$ triplet.

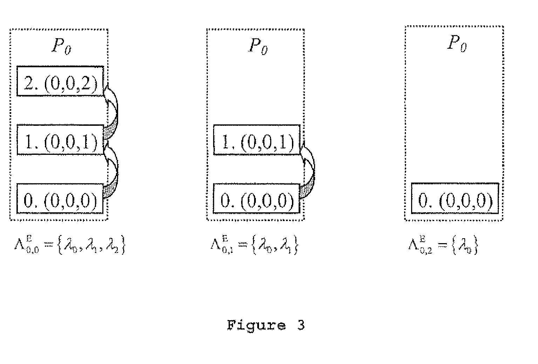

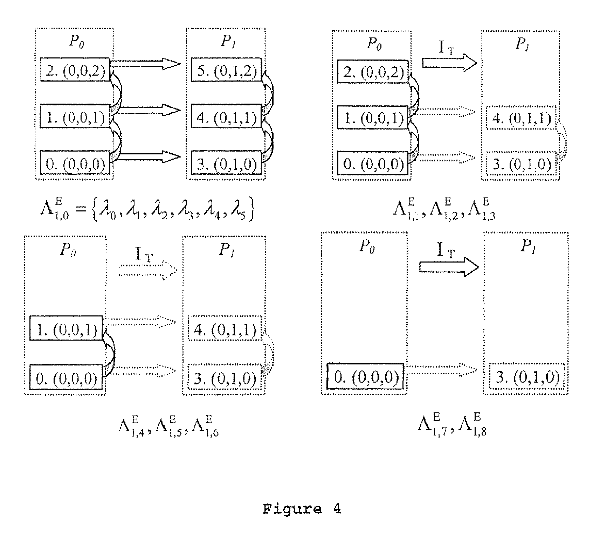

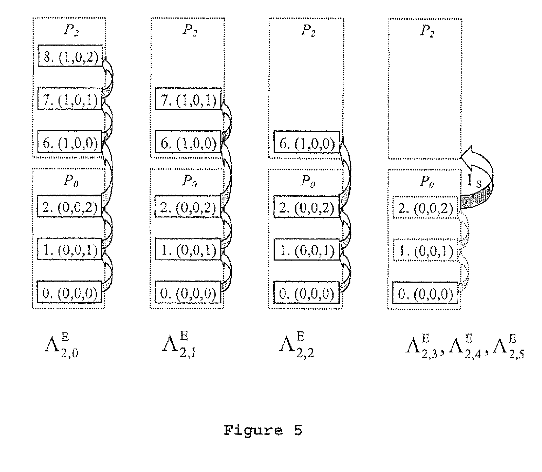

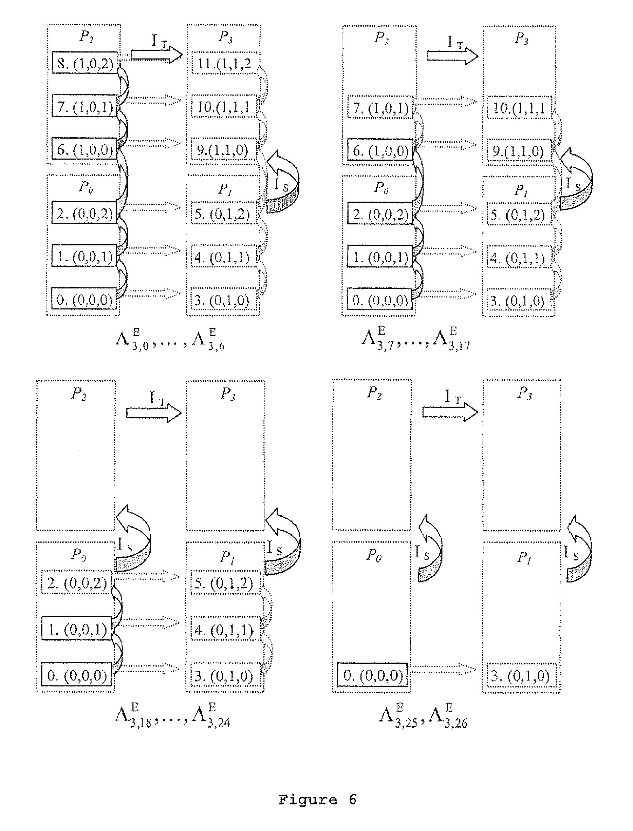

All possible decodable sets of layers for extended mode of extraction are displayed in Figures 3-6. The layers displayed with dashed lines represent any decodable combination involving these layers (including omitting them completely). The temporal interpolation procedure is denoted as $I_T$, while the spatial one is denoted as $I_S$.

Table 1 gives the comparison between different modes of extraction. It can be seen that the proposed mode of extraction gives higher number of useful layer combinations, which is for $P_3$ nine times higher than the number obtainable with the normal extraction.

Table 1 Specific values for the given example

| $P_k$ | $T_k$ | $D_k$ | $Q_k$ | $M_k$ | $C_D(P_k)$ | $C_U(P_k)$ | $C_E(P_k)$ (A) | $C_E(P_k)$(B) |
|-------|-------|-------|-------|-------|------------|------------|----------------|----------------|
| $P_0$ | 1 | 3 | 3 | 3 | 3 | 4 | 3 | 3 |
| $P_1$ | 2 | 3 | 3 | 6 | 3 | 32 | 6 | 9 |

(continued)

| $P_k$ | $T_k$ | $D_k$ | $Q_k$ | $M_k$ | $C_D(P_k)$ | $C_U(P_k)$ | $C_E(P_k)$ (A) | $C_E(P_k)$(B) |
|-------|-------|-------|-------|-------|------------|------------|----------------|---------------|
| $P_2$ | 1 | 6 | 3 | 6 | 3 | 32 | 6 | 6 |
| $P_3$ | 2 | 6 | 3 | 12 | 3 | 2048 | 21 | 27 |

**Rendering operations**

In the following the rendering operations are classified into four groups, and their features are discussed. The groups, listed in the order of the increasing complexity, are:

1. No temporal or spatial interpolation. Trivial case; corresponds to the normal extraction operation mode.

2. No temporal interpolation, spatial interpolation of the frames decoded at lower spatial resolution. As spatial interpolation is already taken into the computational cost in decoding of the video (performed for the purpose of obtaining the prediction signal for the target spatial resolution), spatial interpolation of the frames decoded at the lower spatial resolution would not add a significant overhead to the overall complexity of decoding. Since the video is displayed at its original frame-rate, this is equivalent to preserving at least one dependency layer at each of the temporal levels, i.e. $d_t > 0$ for each $t$. This stems from the fact that no temporal interpolation is employed - which in its simplest form is zero-order hold (one-side first neighbour frame repeating). This effectively excludes dropping of video frames in this rendering operation, as it is equivalent to zero-order hold temporal interpolation. This is also justified by the fact that perceptual quality of frame-dropping can be better modelled if treated as a temporal adaptation process.

3. Simple temporal averaging. As discussed above, if only nearest neighbour interpolation is considered, then in the case where at the temporal level t no dependency layers are present, this effectively becomes the same as playing the sequence at a lower frame rate, corresponding to temporal level t - 1. If more than one neighbour is used, e.g. previous and next frame (bilinear interpolation), a weighting strategy when interpolating the missing frame can be devised to obtain an optimal perceptual quality. When some dependency layers are present in the current picture, but not as many levels as in any of the lower temporal levels, then a weighting strategy can include the current picture (decoded at lower dependency layer), along with the neighbouring frames.

4. Spatio-temporal MV-based interpolation. Uses the MV information from the decoded bit-stream. As the previous one, but with increased precision in detection of temporally correlated regions. Techniques employed in error concealment may be employed.

5. Techniques based on local processing of decoded frames (e.g. local motion estimation).

In addition to this, the multiple-loop decoding may be performed at the decoder to obtain the best representation of the lower quality levels (to avoid the impact of using reference frames obtained by decoding at the highest quality layer) .

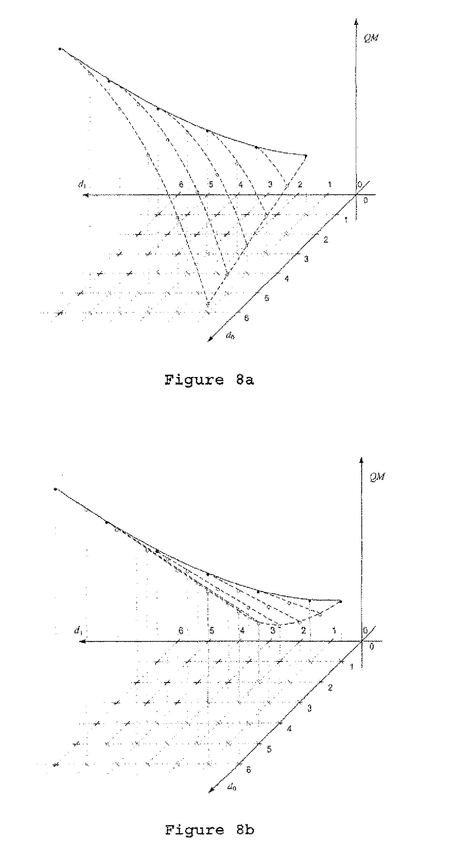

Figure 8 shows an example of the typical shape of the QM surface (as above for the example where $T$ = 2, so it can be depicted with a 3-dimensional space, and $D_0 = D_1 = 6$), obtained by using two different rendering operations. More particularly, Figure 8 shows a rendering method where no temporal interpolation is employed, while Figure 8b shows a rendering method using temporal interpolation.

**Modelling the impairment to obtain the prioritised list of layer combinations**

To be able to efficiently compute the optimal ranking of layer combinations, a method for estimating the expected impairment of visual quality is necessary. This comes from the fact that decoding a different number of quality layers at different temporal level, for different rendering methods, will lead to very different visual impairments, which are not well correlated to the resulting average objective distortion like MSE.

In the following, an example for obtaining a model for simple temporal averaging rendering operation is presented. It consists of linear terms, of which the coefficients may be obtained by training over a set of videos of similar characteristics. The goal is to train the model in such way that the $QM_E$ approximate the real QM. The model is given with:

$$QM_E(d_0, d_1, \ldots, d_{T-1}) = \alpha_C + \alpha_0 f\left(MSE'(d_0, 0), \ldots, MSE'(d_{T-1}, T-1)\right) + \sum_{t=1}^{T-1} \alpha_t g(\upsilon_t)$$

Here $MSE'(d_{t,t})$ is the adjusted MSE of the video sequence frames belonging to the particular temporal level t, decoded using $d_t$ dependency layers. The adjustment of MSE compensates for nonlinearity caused by combining the impairment caused by upsampling of lower spatial levels with the impairment caused by compression. The main reason comes from the fact that the artefacts caused by the spatial interpolation are less annoying than the ones caused by compression, when both produce the same MSE. Coefficients $\alpha_C, \alpha_0, \ldots \alpha_{T-1}$ are the model parameters. Function $f()$, which is known from prior art described above, is an averaging function that combines MSE contributions of all temporal levels (adjusted for specific frames if upsampled), and determines the perceptual distortion without taking the temporal component into account. Function $g(\ )$, which is introduced here, performs the temporal spectral analysis and extracts terms related to temporal frequency components $\upsilon_t$, where if $\upsilon_0$ denotes the original frame-rate of the sequence, then $\upsilon_t = \upsilon_0/2'$, for $t = 1, \ldots, T$-1]. These values can be obtained by taking the FFT of the sequence represented with adjusted MSE values for the required number of frames, and then selecting only the spectral components corresponding to $\upsilon_1$. Function $f(\ )$, and may employ some of the well established models for relationship between the MSE or PSNR and QM. $\alpha_C$ is a correction factor that may vary between sequences, and that corrects for different relative position of the objective quality measure scale compared to the observable perceptual impairment scale.

The part of the model consisting of terms linearly dependent to $g(\upsilon_1)$ reflects the fact that the human visual system is sensitive to the fluctuations of the quality in the temporal direction. For instance, large differences in MSE between neighbouring frames result in annoying artefact. In other words, a rendering method that does not smooth out these fluctuations successfully will have a model with large negative parameters $\alpha_1, \ldots, \alpha_{T-1}$.

To train the model over a set of training videos, a subjective evaluation of video quality may be performed, and then the obtained MOS values are fitted to the selected model by the least squares optimisation. In the case the functions $f(\ )$ and $g(\ )$ are predetermined, as in the example above, the model parameters $\alpha_C, \alpha_0, \ldots, \alpha_{T-1}$ may be obtained by a linear regression. In addition to that, if $f(\ )$ and $g(\ )$ are non-linear and have some parameters that are not predetermined, non-linear regression methods may be used.

After the values of $QM_E$ are obtained using the selected model, the optimal layer combination list is obtained by the following procedure:

Step1: Order all layer combinations by a decreasing bit-rate (the highest one on the top) and place them into the input list. Initialise the output list to contain no elements.

Step2: Searching from the top of the input list, find the combination with the highest $QM_E$ and put it at the bottom of the output list.

Step3: Remove all layer combinations from the input list that have been skipped in Step2, between top and the former position of the removed layer combination. If input list is empty skip to End, if it is not go back to Step2.

End: The output list contains the optimal layer combinations, ordered by decreasing $QM_E$ (highest at the top). The number of such combinations is denoted as $C'_E$.

**Signalling the prioritised list of layer combinations**

The mechanism for providing layer prioritisation that already exists in the SVC is the priority_id syntax element. Since it would not be possible to map such one-dimensional priority information of a particular layer to priority information of particular layer combination obtained with unconstrained extraction operation, a method of conveying the priority information is required. This section defines the required signalling.

Since a connection between a particular layer combination ordering and the required rendering operation needs to be established, some sort of signalling between encoder, adapter and decoder is necessary. A particular rendering operation is identified with a corresponding identifier (e.g. universal resource identifier - URI). Using such an identifier, the decoder's capabilities regarding rendering operations are signalled to the adapter, possibly via some higher-layer protocol (e.g. Session Description Protocol media capabilities Negotiation, IETF Internet-Draft), and then the adapter verifies if it possesses the information on the layer combination priority list that is associated with the same identifier. It is assumed that the current spatio-temporal operation point is known, and is communicated with the same higher-layer protocol.

The required signalling is achieved with the rendering_caps_layer_order (RCLO) SEI message. Its syntax elements are specified in the following:

- **rendering_caps-uri**[RenderingCapsUriIdx] is the RenderingCapsUriIdx-th byte of a null-terminated string encoded in UTF-8 characters, specifying the universal resource identifier (URI) of the description of the decoder rendering capabilities used to calculate the layer combination ordering for all the access units for which the current SEI message is effective.

- **specific_rendering_cap_parameters_flag** specifies the presence of the information on the specific rendering operation parameters. If specific_rendering_cap_parameters_flag is equal to 1, the parameters are defined in specific_rendering_cap_parameters( ). The contents of this part of syntax are necessary for the decoder to be able to correctly perform the rendering operation. The specific contents of this message will not be defined here, as it depends on the specific rendering operation, but may include the information on the individual frame distortions and the amount of interframe correlation in the original video sequence.

- **layer_comb_priority_order_present_flag** specifies the presence of the information on the layer combinations ordering. If layer_comb_priority_order_present_flag is equal to 1, the layer combinations ordering information is present. By setting layer_comb_priority_order_present_flag to 0, only the specific rendering operation parameters can be sent in the message. This setting exists for the case where this SEI message is used to signal the rendering parameters to the decoder, possibly only for rendering_caps_uri values that decoder specified in its capabilities declaration.

| rendering_caps_layer_order( ) { | C | Descriptor |
|---|---|---|
| num_rendering_caps | 5 | ue(v) |
| for( n = 0; i < num_rendering_caps; n++ ) { | | |
| RenderingCapsUriIdx = 0 | | |
| do { | | |
| rendering_caps_uri[RenderingCapsUriIdx] | 5 | b(8) |
| } while (rendering_caps_uri[RenderingCapsUriIdx++] != 0) | | |
| specific_rendering_cap_parameters_present_flag | 5 | u(1) |
| if ( specific_rendering_cap_parameters_present_flag ) { | | |

| | | |
|---|---|---|
| payloadSize = 0 | | |
| while( next_bits( 8 ) = = 0xFF ) { | | |
| **ff_byte** /* equal to 0xFF */ | 5 | f(8) |
| payloadSize += 255 | | |
| } | | |
| specific_rendering_cap_parameters_payload( payloadSize ) | | |
| } | | |
| **layer_comb_priority_order_present_flag** | 5 | u(1) |
| if ( layer_comb_priority_order_present_flag ) { | | |
| layer_comb_priority_order( ) | | |
| } | | |
| } | | |

The adaptation module, after receiving this message, possesses the information on the optimal order of layer combinations to be sent to the decoder. A particular layer combinations is signalled to the decoder via scalability information layers not present SEI message (scalability_info_layers_notpresent ( ), as defined in MPEG-4 SVC standard).

In the following, syntax element layer_comb_priority_order( ) is defined, where layer combinations are given in the order of the decreasing quality. The following syntax elements are specified:

- **num_combinations** corresponds to $C_E^t$ - number of combinations

- **num_layers** corresponds to $N$ - number of layers

- **bypass_spatial_levels** corresponds to the number of lowest spatial levels not considered (these are encompassed within s = 0).

- **bypass_temporal_levels** corresponds to the number of lowest temporal levels not considered (these are encompassed within t = 0).

The presence of each layer is specified with a corresponding bit (set to 0 when not present and 1 when present), except for the always present base layer $\lambda_0$, such that the resulting $N$-1-bit word uniquely specifies a particular combination. Word **comb**[$i$], where $i$ = 1,..., $C_E^t - 1$, describing a particular combination, is composed of bits $b_0$ to $b_{N-2}$, corresponding to layers $\lambda_1$ to $\lambda_{N-1}$, respectively:

$$\mathrm{comb}[i] = \mathbf{b}_{N-2}\mathbf{b}_{N-3}\ldots\mathbf{b}_1\mathbf{b}_0$$

The indexing of the layers, i.e. assigning indices $i$ to specific layers in the bit-stream, is specified in the scalability info (SI) SEI message. Word **comb**[0] is reserved for the full bit-stream, e.g. all layers present, and is omitted in the message. The value of the binary vector (value of the binary number represented in this way) corresponding to **comb**[$i$] is denoted as c = |**comb**[$i$]|. For example, $c = 0$ is for the case where only the base layer is selected, e.g. $\mathbf{b}_0 = \mathbf{b}_1 = \ldots = \mathbf{b}_{N-3} = \mathbf{b}_{N-2} = 0$. The ordering requires that for $i < j$ the combination **comb**[$i$] is of higher quality than **comb**[$j$].

| layer_comb_priority_order( ) { | C | Descriptor |
|---|---|---|
| num_layers | 5 | ue(v) |
| num_combinations | 5 | ue(v) |

| | | |
|---|---|---|
| bypass_spatial_levels | 5 | ue(v) |
| bypass_temporal_levels | 5 | ue(v) |
| N = num_layers − 1 | | |
| for( i = 1; i < num_combinations; i++ ) { | | |
| comb[ i ] | 5 | u(N) |
| } | | |
| } | | |

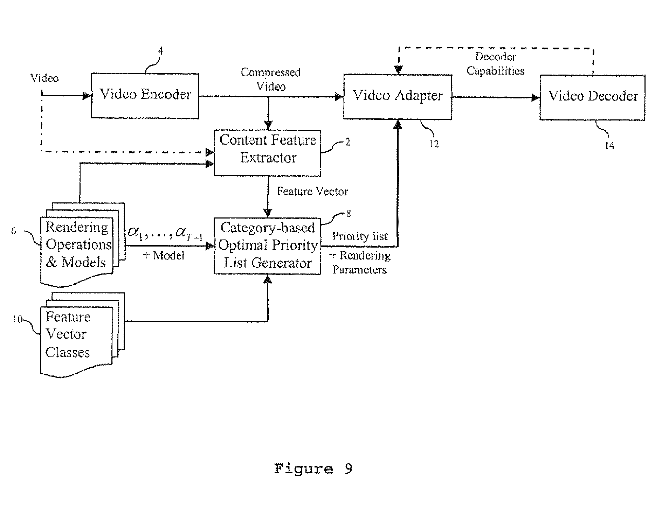

Figure 9 depicts the system diagram, with the required communication directions and modules indicated.

It will be appreciated that the processing modules in the system may be implemented in hardware, software, or a combination of hardware and software.

The Content Feature Extraction module 2 extracts different features of the compressed video, outputted by the Video Encoder module 4. In the case the original video is available then it may also compute different distortion metrics, and other features of the original video, for instance temporal correlation, motion activity, etc. Alternatively if it is not available, it may extract the features of the encoded video, for instance bit-rates of particular video layers, number of specific types of macroblocks, etc. Since videos can differ widely in their characteristics, a different model or model parameters may exist for a different category of video, identified by a content feature vector class matching. In addition to that, since different rendering operations may require different models, the Content Feature Extraction module 2 receives the request for a specific feature vector from a database 6 of supported Rendering Operations.

The Category-based Optimal Priority List Generation module 8 compares the extracted content feature vector with the ones in the Feature Vector Classes database 10, and utilises the corresponding model to generate the optimal priority list of scalable video layers. This information, along with the necessary information needed for rendering at the decoder, is sent to the Video Adapter module 12. The Video Adapter module 12 possesses the information on Decoder Capabilities, that it received from the Video Decoder module 14, and according to it selects the optimal adaptation strategy. The Video Decoder module 14 performs the rendering of the received scalable video layers, using the information on the used mode, received from Video Adapter 12.

## Modifications and Variations

Many modifications and variations can be made to the embodiments described above.

## Embodiment without signalling of rendering capabilities

In the embodiment described above, the video decoder signals its rendering capabilities to the video adapter, and the video adapter selects the optimal layer combination in dependence upon both the bandwidth of the communication channel over which the video data is to be transmitted to the video decoder and the signalled rendering capabilities of the video decoder. In a modification, however, it is not necessary for the video decoder to signal its rendering capabilities (for example if the video decoder does not support any of the operations for compensation of missing layers). In this case, the video adapter selects the layer combination in dependence upon the communication channel bandwidth but not the video decoder's rendering capabilities.

13

**Higher granularity of bit-rate adaptation**

In extended extraction mode a higher level of granularity of bit-rate adaptation may be supported by assigning the priority_id syntax element to different pictures and/or picture slices, preferably in the rate-distortion optimal sense, as proposed in JVT-S044. This would create new adaptation points, which can be dynamically selected on a frame-by-frame basis. The same rendering operations would be performed, with the possibility of additional smoothing of quality within individual frames if the prioritisation is done on a slice basis.

**Alternatives for coding the layer_comb_priority_order( ) message**

Solutions for layer_comb_priority_order( ) will differ in the required bit-length of the message. In the following alternative, the encoding is differential - it conveys information on the added and removed layers in respect to the previous combination of layers. The following syntax elements are defined:

- layer_id corresponds to index $n$ in $\lambda_n$

| layer_comb_priority_order( ) { | C | Descriptor |
|---|---|---|
| num_combinations | 5 | ue(v) |
| for( i = 1; i < num_combinations; i++ ) { | | |
| num_removed_layers[ i ] | 5 | ue(8) |
| for( j = 0; j < num_removed_layers; i++ ) { | | |
| layer_id[ j ] | 5 | u(8) |
| } | | |
| num_added_layers[ i ] | 5 | ue(8) |
| for( j = 0; j < num_added_layers; i++ ) { | | |
| layer_id[ j ] | 5 | u(8) |
| } | | |
| } | | |
| } | | |

**Claims**

1. Apparatus for processing a video data stream comprising a plurality of scalable bitstream layers, the apparatus comprising:

   a priority list generator operable to generate a priority list of scalable bitstream layer combinations in dependence upon content features of the video data; and
   a video adapter operable to process the priority list generated by the priority list generator to select a layer combination for reproduction of the video data stream in dependence upon the bandwidth available for communication of the video data to a video decoder and operable to transmit layers of the video data stream to the video decoder in accordance with the selected layer combination.

2. Apparatus according to Claim 1, wherein the video adapter is operable to receive information from the video decoder defining video data rendering capabilities of the video decoder and is operable to process the priority list generated by the priority list generator to select the layer combination for reproduction of the video data stream in dependence upon the bandwidth available for communication of the video data to the video decoder and the rendering capabilities of the video decoder.

3. Apparatus according to Claim 2, wherein the video data adapter is operable to receive information from the video decoder defining video data rendering capabilities comprising missing information compensation operations.

4. Apparatus according to any preceding claim, wherein the priority list generator is operable to receive content features generated during encoding of the video data stream and to generate the priority list in dependence thereon.

5. Apparatus according to any of Claims 1 to 3, wherein:

   the apparatus further comprises a content feature extractor operable to extract content features from the video data stream; and
   the priority list generator is operable to generate the priority list in dependence upon the content features extracted by the content feature extractor.

6. Apparatus according to Claim 5, wherein:

   the content feature extractor is operable to generate a content feature vector in dependence upon a database of video data rendering operations supported by the video decoder; and
   the priority list generator is operable to generate the priority list in dependence upon the generated content feature vector.

7. Apparatus according to Claim 6, wherein the video data rendering operations comprise decoding and missing information compensation operations.

8. Apparatus according to Claim 6 or Claim 7, wherein the priority list generator is operable to generate the priority list by comparing the content feature vector generated by the content feature extractor with a database of content feature vectors to identify an impairment estimation model defining a relationship between a human visual system and layer ordering, and computing a priority list defining a layer combination in dependence upon the identified model.

9. Apparatus according to any preceding claim, further comprising a video decoder operable to process the layers selected and transmitted by the video adapter to generate video data for display.

10. A method of processing a video data stream comprising a plurality of scalable bitstream layers, the method comprising:

   using information defining the bandwidth available for transmission of video data to a video decoder to generate a layer combination for the scalable bitstream layers; and
   transmitting layers of the video data stream to a video decoder in accordance with the generated layer combination.

11. A method according to Claim 10, wherein the layer combination is generated using information defining the bandwidth available for transmission of video data to the video decoder and also information defining the video decoder's capabilities to compensate for missing parts of the video information during decoding of the video data stream.

12. A method according to Claim 10 or Claim 11, wherein the layer combination is generated in dependence upon an impairment estimation model defining a relationship between a human visual system and layer ordering.

13. A method according to Claim 12, wherein the impairment estimation model is selected in dependence upon content features of the video data stream.

14. A method according to Claim 13, wherein the impairment estimation model is selected in dependence upon a content feature vector generated in dependence upon the video decoder's capabilities to decode the video data stream and compensate for missing parts of the video information.

**15.** A method according to Claim 13 or Claim 14 wherein content features are extracted from the encoded video data stream.

**16.** A method according to any of Claims 10 to 15, further comprising processing the transmitted layers of the video stream to generate video data for display.

**17.** A storage medium storing computer program instructions to program a programmable processing apparatus to become configured as an apparatus as set out in at least one of Claims 1 to 9.

**18.** A storage medium storing computer program instructions to program a programmable processing apparatus to become operable to perform a method as set out in at least one of Claims 10 to 16.

**19.** A signal carrying computer program instructions to program a programmable processing apparatus to become configured as an apparatus as set out in at least one of Claims 1 to 9.

**20.** A signal carrying computer program instructions to program a programmable processing apparatus to become operable to perform a method as set out in at least one of Claims 10 to 16.

Figure 1

Figure 2

Figure 3

Figure 4

Figure 5

$\Lambda_{3,0}^{E}, \ldots, \Lambda_{3,6}^{E}$

$\Lambda_{3,7}^{E}, \ldots, \Lambda_{3,17}^{E}$

$\Lambda_{3,18}^{E}, \ldots, \Lambda_{3,24}^{E}$

$\Lambda_{3,25}^{E}, \Lambda_{3,26}^{E}$

Figure 6

Figure 7

Figure 8a

Figure 8b

Figure 9

Europäisches
Patentamt

European
Patent Office

Office européen
des brevets

## EUROPEAN SEARCH REPORT

Application Number

EP 07 11 8521

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2003/135863 A1 (VAN DER SCHAAR MIHAELA [US]) 17 July 2003 (2003-07-17) <br> * abstract * <br> * figures 2,3 * <br> * paragraphs [0001] - [0041] * <br> * paragraph [0071] * <br> ----- | 1-20 | INV. <br> H04N7/26 <br> H04N7/50 <br> H04N7/24 |
| Y | US 2005/175084 A1 (HONDA YOSHIMASA [JP] ET AL) 11 August 2005 (2005-08-11) <br> * abstract * <br> * figures 2-4,8,9,17 * <br> * paragraphs [0003] - [0011] * <br> * paragraphs [0046] - [0062] * <br> * paragraphs [0075] - [0077] * <br> * paragraphs [0089] - [0101] * <br> * paragraphs [0119] - [0137] * <br> * paragraphs [0153] - [0155] * <br> * paragraph [0159] * <br> ----- | 1-20 | |
| Y | WO 2007/084994 A (QUALCOMM INC [US]; SUBRAMANIA SITARAMAN GANAPATHY [US]; WALKER GORDON) 26 July 2007 (2007-07-26) <br> * figure 4B * <br> * paragraphs [0025], [0029], [0030], [0033] - [0037], [0040], [0044], [0049] - [0053], [0049], [0059] - [0062] * <br> ----- <br> -/-- | 6-8,14 | TECHNICAL FIELDS SEARCHED (IPC) <br><br> H04N |

The present search report has been drawn up for all claims

| Place of search | Date of completion of the search | Examiner |
|---|---|---|
| Munich | 9 March 2009 | Le Guen, Benjamin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 07 11 8521

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MICHAL RIES ET AL: "Content Based Video Quality Estimation for H.264/AVC Video Streaming" WIRELESS COMMUNICATIONS AND NETWORKING CONFERENCE, 2007.WCNC 2007. IEE E, IEEE, PI, 1 March 2007 (2007-03-01), pages 2668-2673, XP031097634 ISBN: 978-1-4244-0658-6 * abstract * * page 2670, right-hand column, lines 33-40 * * page 2671, right-hand column, line 41 - page 2672, right-hand column, line 23 * * page 2674, left-hand column, line 13 - right-hand column * * figures 2,5; table IV * | 8,13-15 | |
| A | AMONOU, CAMMAS, KERVADEC, PATEUX: "Optimized Rate-Distortion Extraction With Quality Layers in the Scalable Extension of H.264/AVC" IEEE TRANSACTIONS ON CIRCUITS AND SYSTEMS FOR VIDEO TECHNOLOGY, vol. 17, no. 9, September 2007 (2007-09), pages 1186-1193, XP002515111 * the whole document * | 1-20 | |
| D,A | JEONGYEON LIM, PENG CHEN: "An optimization-theoretic approach to optimal extraction of SVC bitstreams" JOINT VIDEO TEAM (JVT) OF ISO/IEC MPEG & ITU-T VCEG, no. JVT-U081, 20 October 2006 (2006-10-20), - 27 October 2006 (2006-10-27) pages 1-10, XP002515112 Hangzhou, China * the whole document * | 1-20 | TECHNICAL FIELDS SEARCHED (IPC) |

The present search report has been drawn up for all claims

| Place of search | Date of completion of the search | Examiner |
|---|---|---|
| Munich | 9 March 2009 | Le Guen, Benjamin |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 07 11 8521

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2009

| Patent document cited in search report | | Publication date | Patent family member(s) | | Publication date |
|---|---|---|---|---|---|
| US 2003135863 | A1 | 17-07-2003 | AT | 329444 T | 15-06-2006 |
| | | | AU | 2003201700 A1 | 30-07-2003 |
| | | | CN | 1618226 A | 18-05-2005 |
| | | | DE | 60305880 T2 | 01-03-2007 |
| | | | EP | 1472845 A1 | 03-11-2004 |
| | | | WO | 03061240 A1 | 24-07-2003 |
| | | | JP | 2005515714 T | 26-05-2005 |
| US 2005175084 | A1 | 11-08-2005 | CN | 1736107 A | 15-02-2006 |
| | | | JP | 2004266503 A | 24-09-2004 |
| | | | WO | 2004077831 A1 | 10-09-2004 |
| WO 2007084994 | A | 26-07-2007 | AR | 059105 A1 | 12-03-2008 |
| | | | EP | 1980115 A2 | 15-10-2008 |
| | | | KR | 20080098042 A | 06-11-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Z. WANG et al.** Image quality assessment: from error visibility to structural similarity. *IEEE Transactions on Image Processing,* April 2004, vol. 13, 600-612
- **S. KHAN et al.** MOS-Based Multiuser Multiapplication Cross-Layer Optimization for Mobile Multimedia Communication. *Advances in Multimedia,* 2007
- **HAUSKE.** Subjective Image Quality of Low-Rate and Low-Resolution Video Sequences. *8th International Workshop on Mobile Multimedia Communications,* March 2003
- **J. LIM et al.** An optimization-theoretic approach to optimal extraction of SVC bitstream. *Hangzhou,* October 2006
- **CHEN YING et al.** Frame Loss Error Concealment for SVC. *JVT-Q046,* October 2005